# EUROPEAN PATENT APPLICATION

(11) **EP 3 687 166 A1**
(43) Date of publication of application: **29.07.2020**
(21) Application number: 19153263.9
(22) Date of filing: 23.01.2019
(51) Int. Cl.: H04N 13/139, H04N 21/414, H04N 21/4402, H04N 21/443, H04N 21/81

(54) **INTEROPERABLE 3D IMAGE CONTENT HANDLING**

(71) Applicant: Ultra-D Coöperatief U.A., 5657 HJ Eindhoven (NL)
(72) Inventor: BERENDSE, Danny, 5657 HJ Eindhoven (NL); DE GROOT, Mark Josephus Gerardus, 5657 HJ Eindhoven (NL); CASTRO THEUNE, Patric, 5657 HJ Eindhoven (NL); HEREDIA SORIANO, Francisco Javier, 5657 HJ Eindhoven (NL)
(74) Representative: DeltaPatents B.V.

(57) **Abstract**

A system and computer-implemented method(s) are described which provide a backward-compatible way of outputting 3D image content by an application. Namely, the application may output the 3D image content as a primary view comprising 2D image data and a secondary view comprising 3D-enabling auxiliary data. The application may mutually arrange both views such that a 'legacy' 2D display server component for a 2D display omits drawing, or overdraws, the secondary view when compositing the at least two views into a display signal, while a 3D display server component may access the 3D-enabling auxiliary data in the secondary view and process the 2D image data and the 3D-enabling auxiliary data appropriately.

## Description

### FIELD OF THE INVENTION

The invention relates to a system for displaying views of an application on a display, wherein the views represent 3D image content for a 3D display. The invention further relates to a computer-implemented method for providing, by the application, the 3D image content to a window manager, and to a computer-implemented method for determining, by a display server component, that the views represent 3D image content.

### BACKGROUND ART

Increasingly, display devices such as televisions, digital photo frames, tablets and smartphones comprise 3D displays to provide a user with a perception of depth when viewing content on such a device. For that purpose, such 3D displays may, either by themselves or together with glasses worn by the user, provide the user with different images in each eye so as to provide the user a perception of depth based on stereoscopy.

The 3D image content to be displayed on such 3D displays may generally be represented by 2D image data and so-called 3D-enabling auxiliary data. The latter data may be indicative of depth of the 2D image data. For example, the 3D-enabling auxiliary data may be further 2D image data which together with the 2D image data represents a pair of stereo images, or depth-related data indicative of a distance of objects shown in the 2D image data to a camera or viewer. Such depth-related data may contain depth values, but also disparity values, parallax values or other types of depth-related values.

The 3D image content may be displayed by an application running on an operating system. Such an operating system may provide a window manager for managing the visibility of views generated by applications. In addition, the operating system may provide one or more display server components which may each be specific to a type of display and which may be configured to, based on visibility information obtained from the window manager, composite the views of application(s) into a display signal for display. These display server components may be components of a single software component called 'display server', but may also each represent a separate display server.

It is noted that the window manager and display server(s) may be implemented as separate software components but may also be combined in a single software component or in another manner partitioned over software components. A specific example is that the Android operating system provides a window manager named 'WindowManager' and a display server named 'SurfaceFlinger'. Various other types of window managers and/or display servers are known as well, for example, as part of other operating systems.

A disadvantage of known ways of displaying 3D image content by an application is that the application may be inflexible with respect to the type of display server component and display. Namely, a particular application may support only one type of display, e.g., a 2D or 3D display, or may in principle support different types of displays but may be unaware of the display type connected to the system and may need to be manually configured.

Such flexibility is desirable, for example to support dynamic switching, e.g., during runtime, between different types of displays or to support multi-display (also referred to as 'multi-monitor') setups involving different types of displays. Such type of flexibility may also be referred to as 'interoperability'. In particular, it is desirable to provide such interoperability between 2D ('legacy') displays and 3D displays. Although in many cases a legacy 2D display may reproduce 3D image content which may be generated or output by a particular application, such 3D image content may then be reproduced in the form of a 2D image, which may be undesirable. For example, if the 3D image content is stereo content provided as two views side-by-side, a 2D display server component may render both views side-by-side on the 2D display. This is not desirable, as it rather may be desired to render only one of both views on a 2D display while disregarding the other view.

### SUMMARY OF THE INVENTION

It is an object of the invention to provide a way of displaying 3D image content by an application which is more flexible with respect to the type of display server component and display.

In accordance with a first aspect of the invention, a system is provided for displaying views of an application on a display, wherein the views represent 3D image content for a 3D display. The system comprises:
- a memory comprising system data representing an operating system and application data representing the application;
- a processor subsystem configured to communicate with the memory and to execute the operating system and the application;
wherein the operating system is configured to establish:
- a window manager for managing visibility of views generated by applications;
- one or more display server components, the one or more display server components being specific to a type of display and configured to, based on visibility information obtained from the window manager, composite the views into a display signal for display;
wherein the application is configured to provide the 3D image content to the window manager in the form of at least two views which are mutually arranged in accordance with a view configuration, wherein the at least two views comprise a primary view comprising 2D image data and a secondary view comprising 3D-enabling auxiliary data which is indicative of depth of the 2D image data, and wherein the view configuration is selected to cause a 2D display server component for a 2D display to omit drawing, or overdraw, the secondary view when compositing the at least two views into the display signal.

In accordance with a further aspect of the invention, a display device is provided comprising the system.

In accordance with a further aspect of the invention, a computer-implemented method is provided for providing views of an application to a window manager of an operating system, wherein the views represent 3D image content for a 3D display, wherein the operating system is configured to establish:
the window manager, wherein the window manager is configured to manage visibility of views generated by applications;
one or more display server components, the one or more display server components being specific to a type of display and configured to, based on visibility information obtained from the window manager, composite the views into a display signal for display;
the method comprising, by the application, providing the 3D image content to the window manager in the form of at least two views which are mutually arranged in accordance with a view configuration, wherein the at least two views comprise a primary view comprising 2D image data and a secondary view comprising 3D-enabling auxiliary data which is indicative of depth of the 2D image data, and wherein the view configuration is selected to cause a 2D display server component for a 2D display to omit drawing, or overdraw, the secondary view when compositing the at least two views into the display signal.

In accordance with a further aspect of the invention, a computer-implemented method is provided for compositing views of an application executed on an operating system, wherein the views represent 3D image content for a 3D display, wherein the operating system is configured to establish:
a window manager for managing visibility of views generated by applications;
a 3D display server component for a 3D display, the 3D display server component being configured to, based on visibility information obtained from the window manager, composite the views into a display signal for the 3D display;
wherein the application is configured to provide the 3D image content to the window manager in the form of at least two views which are mutually arranged in accordance with a view configuration, wherein the at least two views comprise a primary view comprising 2D image data and a secondary view comprising 3D-enabling auxiliary data which is indicative of depth of the 2D image data, and wherein the view configuration is selected to cause a 2D display server component for a 2D display to omit drawing, or overdraw, the secondary view when compositing the at least two views into the display signal;
the method comprising, by the 3D display server component:
   - determining that the at least two views represent 3D image content on the basis of signaling received from the application, or metadata of the application; and
   - processing the primary view and the secondary view to obtain the display signal for the 3D display.

A further aspect of the invention provides a transitory or non-transitory computer-readable medium comprising a computer program representing the application or the 3D display server component, the computer program comprising instructions for causing a processor system to perform the method representing the respective entity.

The above measures involve an application providing the 3D image content to the window manager in the form of at least two views, namely a primary view comprising 2D image data and a secondary view comprising 3D-enabling auxiliary data which is indicative of depth of the 2D image data. Here and elsewhere, the term 'view' may refer to a basic building block of a graphical user interface, which may also be referred to as 'view object'. Typically, a view represents a rectangular area on the screen which may display content of the application. For example, in Android, such a view may be represented by the public class 'View', while in iOS, such a view may be represented by a 'View Object', etc. It is noted that in many operating systems, a 'window' of an application may contain one or more views, and as such, a view may not need to represented by a separate window.

The primary view may thus show an image, such as a photograph (still image), a video frame, an image generated by computer rendering, etc., while the 3D-enabling auxiliary data may be indicative of the depth of said image. The concept of representing 3D image content by 2D image data and 3D-enabling auxiliary data is known per se. Such auxiliary data may take various forms, including but not limited to further 2D image data which together with the 2D image data represents a pair of stereo images, or depth-related data indicative of a distance of objects shown in the 2D image data to a camera or viewer.

The application may thus create a separate view for the 2D image data and a sperate view for the 3D-enabling auxiliary data. The views are mutually arranged in accordance with a view configuration. Such a view configuration may be defined and/or established by the application and may be represented by one or more parameters which define at least a relative position of both views, for example, within the application's window. For example, in Android, the parameters may be parameters of the public class 'RelativeLayout' according to which the positions of views can be described in relation to each other. The thus-configured relative position may then be established by the application using the function Set.ContentView having the particular RelativeLayout as argument.

It will be appreciated that depending on the type of operating system and/or window manager, various other mechanisms exist and may be advantageously used to define and/or establish a view configuration for the primary view and the secondary view.

In accordance with the above measures, the application specifically defines and/or establishes the view configuration such that a 2D display server component for a 2D display, e.g., a 'legacy' display server component, omits drawing or overdraws the secondary view when compositing the at least two views into the display signal. As such, the 2D display server component will omit displaying the 3D-enabling auxiliary data, and rather (only) display the 2D image data. Here and in the following, the term 'display signal' may refer to a signal formatted in a display-specific manner by the display server component, which in itself may be known per se. The display signal may for example be generated as an output image in an output buffer which is formatted in a display-specific manner.

A non-limiting example is that the application may be configured to stack the primary view in front of the secondary view to establish as the selected view configuration a view configuration in which the primary view occludes the secondary view. Such stacking of views may in fact be a default behavior of the public class 'RelativeLayout', with the application only having to ensure that the primary view is stacked in front of the secondary view, rather than the other way around. This may, for example, be done by the application assigning a relative Z-order to both views which specifically causes the primary view to be stacked in front of the secondary view. Again referring to the example of the public class 'RelativeLayout', this may involve the application or programmer choosing an appropriate enumeration order of the views, or using the function view.setZ(float), etc.

A 2D display server component, if present and active in the operating system may then overdraw the secondary view, or may omit drawing the secondary view when the component determines that the secondary view is occluded by the primary view.

At the same time, a 3D display server component, if present and activate in the operating system, may determine that the at least two views represent 3D image content, for example on the basis of signaling received from the application, or metadata of the application. Having identified that the primary view and the secondary view represent 3D image content, the 3D display server component may then process the primary view and the secondary view in a manner as known per se so as to obtain the display signal for the 3D display. As such, a 3D display server component may not overdraw the secondary view, but may rather, for example, place the secondary view side-by-side besides the primary view in the display signal.

The above measures provide a backward-compatible way of outputting 3D image content by an application. Namely, a 'legacy' 2D display server component may show the primary view, while a 3D display server component may access the 3D-enabling auxiliary data in the secondary view and process the 2D image data and the 3D-enabling auxiliary data appropriately.

This may not only provide backwards compatibility to 2D display server components, but also to other ('legacy') types of display server components which are not configured to determine that the at least two views provided by the application represent 3D image content. Such legacy display server components may include the aforementioned 2D display server components, but also legacy 3D display server components and streaming or casting servers such as Miracast. Yet another advantage is that the application may not have to detect which type of display server component is present and active and adjust its output accordingly. The latter may not even be possible in a multi-display context in which different types of display server components are present and active.

It is noted that in the above and following, any references to the operating system being configured to 'establish' the window manager and/or the one or more display server components may refer to the operating system being configured to allow said software components to be executed by or using the operating system. In some embodiments, the operating system may comprise the window manager and/or the display server(s). In other embodiments, the window manager and/or the display server(s) may be software components which may be provided separately from the operating system.

Optionally, the application is configured to stack the primary view in front of the secondary view to establish as the selected view configuration a view configuration in which the primary view occludes the secondary view. For example, the application may be configured to assign a relative Z-order to the primary view and the secondary view which causes the primary view to be stacked in front of the secondary view.

Optionally, the application is configured to provide a barrier view stacked in between the primary view and the secondary view, wherein the barrier view is opaque and comprises homogenous image data. It may be the case that the primary view is defined to be (partially) translucent, or the primary view may be treated by a display server component as being (partially) translucent. For example, the 2D image data of a primary view may contain RGBA tuples, which are known per se, to establish local transparencies. As such, while a 2D display server component may still overdraw the secondary view with the primary view, the (partial) translucency of the primary view may cause the secondary view to still be (partly) visible, which may disturb the display of the 2D image data in the primary view. To avoid or reduce such disturbances, a barrier view may be provided stacked in between the primary view and the secondary view, for example by selecting a Z-order in between the Z-order of the primary view and the Z-order of the secondary view. The barrier view is generated by the application to be opaque, e.g., non-translucent, so as to cause the secondary view to be occluded by the barrier view during view composition by the 2D display server component. The barrier view is further generated to comprise homogenous image data, so as to reduce any disturbance to the 2D image data in the overlaying primary view. For example, the barrier view may be homogenously black, dark grey or light grey.

Optionally, the application is configured to:
- provide the primary view to the window manager by indicating a viewport which comprises the 2D image data of the primary view; and
- provide the secondary view to the window manager by arranging the 3D-enabling auxiliary data of the secondary view outside of the viewport.

Various alternatives exist to the stacking the primary view in front of the secondary view. For example, the primary view may be provided to the window manager by indicating a viewport to the window manager which comprises the 2D image data of the primary view, e.g., in a buffer. The 3D-enabling auxiliary data may be arranged outside of the viewport, e.g., in the same buffer outside of the viewport, or in a different buffer. Accordingly, a 'legacy' display server component may draw the primary view as shown in the viewport, but may omit drawing the secondary view as it is located outside of the viewport.

Optionally, the one or more display server components comprise a 3D display server component for a 3D display, and the application is configured to signal the 3D display server component that the at least two views represent 3D image content. If a 3D display server component for a 3D display is present and active in the operating system, the application may signal the 3D display server component that the two views represent 3D image content. For example, the 3D display server component may provide an Application Programming Interface (API) for allowing applications to interface with the 3D display server component, and the application may be configured to signal the 3D display server component via the API that the at least two views represent 3D image content, for example by registering an identifier of the at least two views with the 3D display server component via the API. Additionally or alternatively, the 3D display server component may be configured to detect that the at least two views represent 3D image content based on metadata of the application, such as an identifier of the application. As such, the 3D display server component may learn that the at least two views represent 3D image content and process the image(data) in the two views accordingly.

Optionally, the 3D display server component is configured to composite the at least two views by 1) arranging the primary view and the secondary view to be simultaneously shown in the display signal in accordance with a stereo display format, or 2) generating one or more further views based on the primary view and the secondary view, and simultaneously arranging the primary view and the one or more further views in the display signal in accordance with a multiview display format. The above options define ways which are known per se for a 3D display server component to process the primary view and the secondary view to obtain the display signal for the 3D display. The first option may be applicable to stereo content (e.g., 2D image data represents left image, 3D-enabling auxiliary data represents right image), in which the view composition may involve showing both views simultaneously, e.g., side-by-side, in accordance with a top-bottom stereo format or spatially interleaved, e.g., on a line basis. The second option may be applicable to so-called multiview content in which the 3D-enabling auxiliary data represents depth-related content, such as a depth map, and in which so-called view-rendering or view-synthesis techniques are used to render one or more further views representing alternative viewpoints of a scene besides the one shown in the primary view. It is noted that conversions between the different types of 3D display formats are known. As such, irrespective of the type of 3D-enabling auxiliary content, the views may be processed to obtain a desired display format. For example, if the application outputs stereo content, a 3D display server component may estimate disparity between both images and use the disparity map to render one or more further views for a multiview display. Conversely, if the application provides a depth map as 3D-enabling auxiliary content, a display server component may view-render a second image to provide stereo content as output.

It will be appreciated by those skilled in the art that two or more of the above-mentioned embodiments, implementations, and/or optional aspects of the invention may be combined in any way deemed useful.

Modifications and variations of any computer-implemented method and/or any computer program product, which correspond to the described modifications and variations of a corresponding system, can be carried out by a person skilled in the art on the basis of the present description, and vice versa.

### BRIEF DESCRIPTION OF THE DRAWINGS

These and other aspects of the invention are apparent from and will be elucidated with reference to the embodiments described hereinafter. In the drawings,
Fig. 1 shows a schematic overview of interactions between an application, a window manager and several display server components, in which the application provides 3D image content to the window manager in the form of a primary view comprising 2D image data and a secondary view comprising 3D-enabling auxiliary data, and the display server components are each configured to composite the views of applications into a display signal for display on a respective type of display based on visibility information obtained from the window manager;
Fig. 2A illustrates a result of the application stacking the primary view in front of the secondary view to cause a 2D display server component for a 2D display to omit drawing, or overdraw, the secondary view when compositing the views into the display signal;
Fig. 2B shows the application indicating a viewport to the window manager which comprises the 2D image data of the primary view, while the 3D-enabling auxiliary data of the secondary view is located outside of the viewport;
Fig. 3 shows a specific embodiment for the Android Operating System;
Fig. 4 shows a system for displaying views of an application on a display; and
Fig. 5 shows a computer readable medium comprising instruction data.
It should be noted that items which have the same reference numbers in different Figures, have the same structural features and the same functions, or are the same signals. Where the function and/or structure of such an item has been explained, there is no necessity for repeated explanation thereof in the detailed description.

### List of reference numbers

The following list of reference numbers is provided for facilitating the interpretation of the drawings and shall not be construed as limiting the claims.
- 080: (3D) display
- 100: system for displaying views of application
- 120: processor subsystem
- 122: data communication
- 140: memory
- 142: data communication
- 160: bulk storage
- 162: data communication
- 180: display output
- 182: display data

- 200: application
- 210: buffer
- 212: buffer
- 214: buffer
- 220: window manager
- 240: display server
- 252: 2D display server component
- 254: 3D (multiview) display server component
- 256: 3D (stereo) display server component
- 260: Android BSP
- 262: Android WindowManager
- 264: Android SurfaceFlinger
- 280: Service Process
- 282: Extension (Hook)
- 284: Service API

- 300: 2D image data
- 310: 3D-enabling auxiliary data

- 400: primary view, 2D view
- 410: secondary view, 3D-enabling auxiliary view
- 420: Z-order
- 430: viewport
- 440: display signal for 2D display
- 442: display signal for 3D (multiview) display
- 444: display signal for 3D (stereo) display

- 500: computer readable medium
- 510: instruction data

### DESCRIPTION OF THE INVENTION

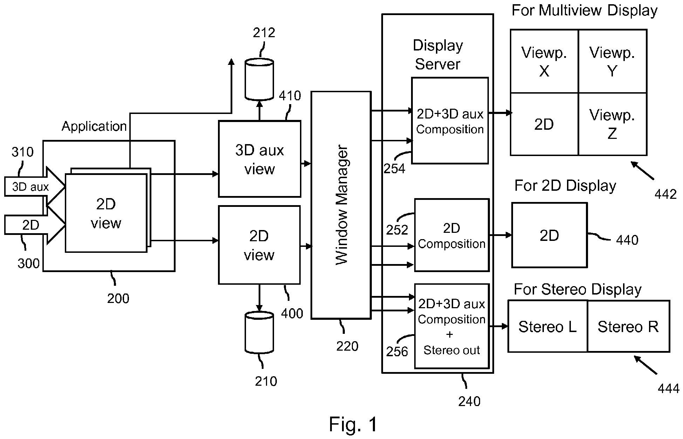

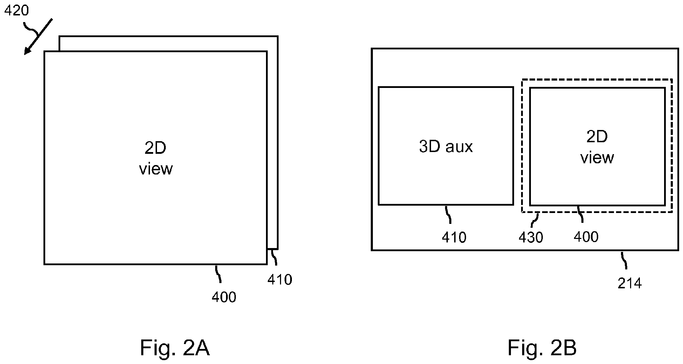

Fig. 1 shows a schematic overview of software components of or running on an operating system, namely an application 200, a window manager 220 and a display server 240, which is shown to comprise, by way of example, a 2D display server component 252 (labeled '2D Composition' in Fig. 1) for a 2D display, a 3D display server component 254 (labeled '2D+3D aux Composition') for a multiview 3D display, and another 3D display server component 256 (labeled '2D+3D aux Composition + Stereo out') for a stereo 3D display. The view composition of each of these display server components 252-256 will be explained further onwards with reference to Fig. 2A and continued reference to Fig. 1.

As can be seen in Fig. 1, the application 200 may receive or retrieve 2D image data 300 and accompanying 3D-enabling auxiliary data 310, for example from a bulk storage device such as a solid-state drive or hard disk (not shown in Fig. 1), or in a streaming manner from a local or wide area network (also not shown in Fig. 1). In a specific example, the 2D image data 300 and the 3D-enabling auxiliary data 310 may together represent a 3D image or a 3D video frame of a 3D video (such as a movie or short video clip). In yet another example, the application may generate the 2D image data 300 and the 3D-enabling auxiliary data 310, for example by computer rendering techniques providing stereo images or an image and accompanying depth map as output. In yet another example, the application 200 may receive or retrieve the 2D image data 300 and generate the 3D-enabling auxiliary data, for example using depth estimation techniques which are known per se in the part.

The application 200 may then generate a 2D view 400 which comprises the 2D image data 300. The 2D view 400 is also referred to as 'primary view'. Here, the term 'comprises' refers to the 2D view 400 normally showing the 2D image data 300, albeit subject to visibility limitations of the 2D view 400 which may, for example, be imposed by the window manager 220. The application 200 may further generate a 3D-enabling auxiliary view 410 which comprises the 3D-enabling auxiliary data. The 3D-enabling auxiliary view 410 is also referred to as 'secondary view'. The data of both views 400, 410 may, for example, be stored in respective buffers 210, 212, for example as buffer objects, or in a same buffer as separate buffer objects (not shown in Fig. 1). The application 200 may provide both views 400, 410 to the window manager 220, for example by using addView() of the android.view.WindowManager class. The window manager may generally manage visibility of the views of applications. For example, if there are other active applications, it may determine whether the views 400, 410 are principally visible, or whether they are principally not visible, for example, by being occluded by another application's view(s) or by a window of the application 200 which comprises the views 400, 410 being 'minimized'.

The primary view 400 and the secondary view 410 are mutually arranged by the application in accordance with a view configuration which causes a 2D display server component for a 2D display to omit drawing, or overdraw, the secondary view when compositing the at least two views into the display signal. There are various ways to define or establish such a view configuration, as e.g. elucidated with reference to Figs. 2A and 2B.

Fig. 2A illustrates a result of the application stacking the primary view 400 in front of the secondary view 410, thereby occluding the secondary view 410. It is noted that Fig. 2A shows, for sake of illustration, a slanted perspective so as to show the secondary view 410 underlying the primary view 400. The display server component, however, considers the primary view 400 to entirely, or at least substantially entirely, occlude the secondary view 410. For example, the secondary view 410 may be assigned a Z-order by the application which puts it behind the primary view 400. At the same time, the location and size of the secondary view 410 may be chosen such that it is (substantially) entirely occluded by the primary view 400. For example, both views 400, 410 may be assigned a same location and size, e.g., in a window of the application (not explicitly shown in Fig. 2A). The stacked views 400, 410 may then cause a 'legacy' display server component, e.g., a display server component which is not able to determine that the stacked views 400, 410 represent 3D image content, to overdraw the secondary view 410 with the primary view 400 when compositing the views into the display signal, thereby occluding the secondary view 410.

This concept may also be referred to as 'explicit overdraw' in which an output image is updated multiple times. A black or otherwise opaque and homogenous barrier view may be inserted in between the primary view 400 and the secondary view 410 in case the primary view 400 is (semi) transparent. Here, "inserted in between" refers to the barrier view having a Z-order placing it behind the primary view 400 but before the secondary view 410, with the barrier view preferably having a same location and size as the primary view 400 and/or the secondary view 410. Alternatively, if the display server component is able to determine that the secondary view 410 is occluded, the display server component may also entirely omit drawing the secondary view 410.

It is noted that to cause the overdrawing of 'legacy' display server components, the views 400, 410 generated by the application may be of a type that can only be composed by the operating system in order to bypass app composition optimization. For example, in Android, this may be achieved by the views 400, 410 being 'SurfaceView' type of views.

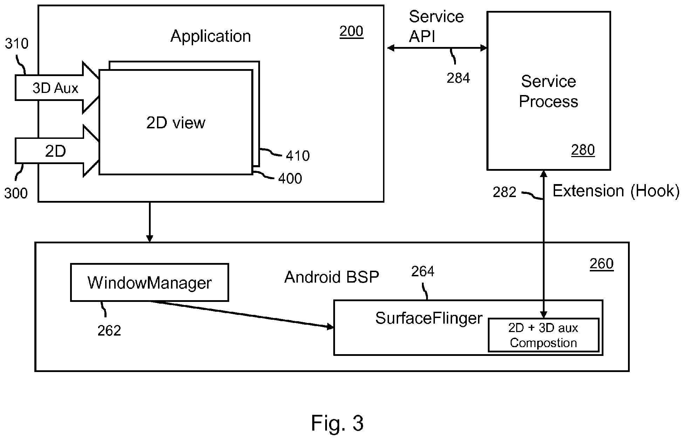

With continued reference to Fig. 1 and 2A, a 3D display server component 254, 256 may be configured to determine that the stacked views 400, 410 of Fig. 2A represent 3D image content. As also later elucidated with reference to Fig. 3, this may be determined for example on the basis of signaling received from the application 200, or metadata of the application 200. Accordingly, the 3D display server component 254, 256 may process the primary view 400 and the secondary view 410 to obtain the display signal for the 3D display. Various ways of processing and compositing are known per se in the art of 3D processing and 3D display.

Fig. 1 shows two non-limiting examples. According to a first example, the 3D display server component 254 may be configured to generate a display signal 442 for a multiview display by using a view-rendering or view-synthesis technique to generate, from the 2D image data and using the 3D-enabling auxiliary data, other viewpoints of the scene shown by the 2D image data, namely in the form of other 2D images labeled, by way of example, 'X', 'Y' and 'Z' in Fig. 1. Such viewpoints are often also referred to as 'views' (hence the name 'view-rendering' and 'view-synthesis') but are not to be confused with the application views 400, 410. The type of view-rendering or view-synthesis may depend on the type of 3D-enabling auxiliary data 310, but normally uses depth-related data indicative of a distance of objects shown in the 2D image data to a camera or viewer. If the 3D-enabling auxiliary data 310 rather represents further 2D image data which together with the 2D image data represents a pair of stereo images, such depth-related data may be first generated from the pair of stereo images, e.g., using disparity estimation techniques as known per se.

The 3D display server component 254 may then create a mosaic-like composition of the 2D image data of the primary view 400, labeled '2D' in Fig. 1, and the 2D image data of the other view(point)s, being in this example the three further view(point)s X, Y and Z. The display signal 442 may then be provided as output image signal to a 3D multiview display which may then render the scene in 3D using the image data of the different view(point)s.

It is noted that also various other known types of multiview compositions may be used instead of a spatial mosaic-like composition. For example, the views may be spatially and/or temporally interleaved. Also other data may be provided in the display signal in addition to or instead of the viewpoints. For example, the 3D-enabling auxiliary data itself may be provided in the display signal, and/or transparency information and/or occlusion information. Another example is that the display signal may comprise a point cloud or a 3D mesh, etc., which are generated from the at least two views. It is noted that in general, the display signal may be provided to the display over a single but also over multiple independent data channels and/or and cables, e.g. via dual DisplayPort.

According to a second example, the 3D display server component 256 may be configured to generate a display signal 444 for a stereo display. This view composition may take different forms depending on the type of 3D-enabling auxiliary data 310. For example, the 3D-enabling auxiliary data 310 represents further 2D image data which together with the 2D image data represents a pair of stereo images. In this case, if the 2D image data 300 represents a left image and the further 2D image data 310 represents a right image, the 3D display server component 256 may composite them into a side-by-side formatted display signal 444. It is noted that also various other known types of spatial and/or temporal stereo view compositions may be used instead. If, however, the 3D-enabling auxiliary data 310 represents depth-related data indicative of a distance of objects shown in the 2D image data to a camera or viewer, the further 2D image data (e.g., the right image) may be generated using the aforementioned view-rendering or view-synthesis techniques.

Fig. 2B shows a further example of the application mutually arranging the primary view 400 and the secondary 410 in accordance with a view configuration which causes a 2D display server component for a 2D display to omit drawing, or overdraw, the secondary view when compositing the at least two views into the display signal. Namely, in this example, the application indicates a viewport 430 to the window manager which comprises the 2D image data of the primary view 400. For example, the viewport 430 may be defined with respect to a buffer 214 (which in general may be a 'buffer object' referring to the buffer being a logical buffer rather than a specific physical buffer). As also shown in Fig. 2B, the 3D-enabling auxiliary data of the secondary view 410 may then be located outside of the viewport 430 in the buffer 214, causing a 'legacy' display server component to omit drawing the secondary view 410. Alternatively, the 3D-enabling auxiliary data of the secondary view 410 may be located outside of the viewport 430 in a different manner, e.g., in a different buffer.

Fig. 3 shows a specific embodiment for the Android Operating System. Again, an application 200 is shown to retrieve or receive 2D image data 300 and 3D-enabling auxiliary data 310, and to establish a primary view 400 comprising the 2D image data and a secondary view 410 comprising the 3D-enabling auxiliary data. Although Fig. 3 shows the primary view 400 being stacked on top the secondary view 410, both views may also be differently mutually arranged so as to cause a 'legacy' display server component to overdraw, or omit drawing, the secondary view 410. This also applies to the views shown in Fig. 1.

In the example of Fig. 3, the application 200 may establish the secondary view 410 as full-screen and arrange the primary view 400 on top of the secondary view 410.

Fig. 3 further shows a window manager 262 and a SurfaceFlinger 264 which may be part of an Android Board Support Package (BSP) 260. The SurfaceFlinger 264 may embody at least part of a 3D display server component by processing the application views and to perform, or at least to enable view composition for a 3D display.

There are various ways to enable the 3D display server component 264 to determine that the stacked views 400, 410 of the application 200 represent 3D image content. In the example of Fig. 3, the application 200 may register the stacked views 400, 410 to represent 3D image content with a service process 280 via a service API 284, with the service process 280 being able to communicate with the 3D display server component 264 via an extension ('hook') 282. Accordingly, the 3D display server component may be informed that the stacked views 400, 410 of the application represent 3D image content, and may process the views accordingly. The service process 280 may be purposefully provided to enable a 3D display server component to determine that the views of an application represent 3D image content.

Although described with reference to Android, the above measures may be applied to various other types of operating systems by a person skilled in the art of application development for the particular operating system. For example, for *nix-based operating systems (Linux, BSD, Unix, etc.), a wide variety of window managers exist (see https://wiki.archlinux.org/index.php/window manager) as well as various customizable display servers (e.g., X11, Wayland-based, Mir, DirectFb). For MacOS or iOS (Quartz), the Quartz Window Services may provide at least part of the functionality of the window server as described, and the Quartz Display Services/ Quartz Composition Services / XQuartz may configured to provide at least part of the functionality of the display server of display server components as described. For Microsoft Windows, the Desktop Window Manager may provide at least part of the functionality of the window server as described, and the GDI Graphics Device Interface may be configured to provide at least part of the functionality of the display server or display server components as described.

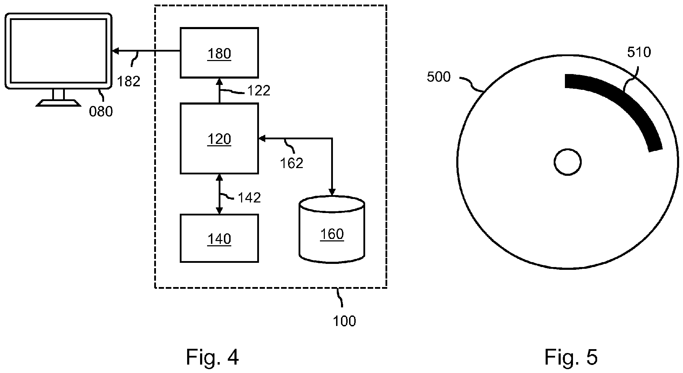

Fig. 4 shows a system 100 for displaying views of an application on a display 080. Such a system 100 may be configured to run the operating system and application as described within this specification, for example with reference to Figs. 1-3. The system 100 may comprise a memory 140 which may comprise system data representing the operating system and application data representing the application. The system 100 may further comprise a processor subsystem 120 configured to communicate with the memory via data communication 142 and to execute the operating system and the application. By way of example, the system 100 is further shown to comprise a display output for outputting display data 182 to a display 080 connected to the system 100. The display data may represent visualized output of the processor system 120, such as the display signal generated by the display server component, which visualized output may be provided to the display output 180 via data communication 122. By way of example, the system 100 is further shown to comprise a bulk storage 160 which may store the 2D image data and the 3D-enabling auxiliary data, which data may be accessed by the processor subsystem via data communication 162.

In general, the system may be embodied in or as a separate device, e.g., in or as a set-top box, personal computer, gaming console or similar device that is connectable to a (3D) display. Alternatively, the system may be embodied in or as a display device which comprises the (3D) display, e.g., in or as a smartphone, tablet device, television, display, monitor, etc. In general, the system may be implemented by a device or apparatus. The device or apparatus may comprise one or more (micro)processors which execute appropriate software. Software implementing the functionality of the function(s) may have been downloaded and/or stored in a corresponding memory or memories, e.g., in volatile memory such as RAM or in non-volatile memory such as Flash. Alternatively, the function(s) of the system may be implemented in the device or apparatus in the form of programmable logic, e.g., as a Field-Programmable Gate Array (FPGA), or as an Application-Specific Integrated Circuit (ASIC), or as any other type of circuit or combination of circuits.

Any of the software components described in this specification may be represented by instructions for a computer, e.g., executable code, which may be stored on a computer readable medium 500, e.g., in the form of a series 510 of machine readable physical marks and/or as a series of elements having different electrical, e.g., magnetic, or optical properties or values. The executable code may be stored in a transitory or non-transitory manner. Examples of computer readable mediums include memory devices, optical storage devices, online software, etc. Fig. 5 shows an optical disc 500. For example, the computer readable medium 500 may store an application as described in this specification, and/or a display server component, possibly as part of an operating system.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (100) for displaying views of an application on a display, wherein the views represent 3D image content for a 3D display (080), the system comprising:
- a memory (140) comprising system data representing an operating system and application data representing the application (200);
- a processor subsystem (120) configured to communicate with the memory and to execute the operating system and the application;
wherein the operating system is configured to establish:
- a window manager (220) for managing visibility of views generated by applications;
- one or more display server components (252-256), the one or more display server components being specific to a type of display and configured to, based on visibility information obtained from the window manager, composite the views into a display signal (440-444) for display;
wherein the application is configured to provide the 3D image content to the window manager in the form of at least two views which are mutually arranged in accordance with a view configuration, wherein the at least two views comprise a primary view (400) comprising 2D image data (300) and a secondary view (410) comprising 3D-enabling auxiliary data (310) which is indicative of depth of the 2D image data, and wherein the view configuration is selected to cause a 2D display server component (252) for a 2D display to omit drawing, or overdraw, the secondary view when compositing the at least two views into the display signal (440).

2. The system (100) according to claim 1, wherein the application (200) is configured to stack the primary view (400) in front of the secondary view (410) to establish as the selected view configuration a view configuration in which the primary view occludes the secondary view.

3. The system (100) according to claim 2, wherein the application (200) is configured to assign a relative Z-order (420) to the primary view (400) and the secondary view (410) which causes the primary view to be stacked in front of the secondary view.

4. The system (100) according to claim 2 or 3, wherein the application (200) is configured to provide a barrier view stacked in between the primary view (400) and the secondary view (410), wherein the barrier view is opaque and comprises homogenous image data.

5. The system (100) according to claim 1, wherein the application (200) is configured to:
- provide the primary view (400) to the window manager (220) by indicating a viewport (430) which comprises the 2D image data of the primary view; and
- provide the secondary view (410) to the window manager by arranging the 3D-enabling auxiliary data of the secondary view outside of the viewport.

6. The system (100) according to any one of claims 1 to 5, wherein the one or more display server components comprise a 3D display server component (254, 256) for a 3D display, and wherein the application (200) is configured to signal the 3D display server component that the at least two views (400, 410) represent 3D image content.

7. The system (100) according to claim 6, wherein the 3D display server component (254, 256) provides an API (284) for allowing applications to interface with the 3D display server component, and wherein the application (200) is configured to signal the 3D display server component via the API that the at least two views (400, 410) represent 3D image content, for example by registering an identifier of the at least two views with the 3D display server component via the API.

8. The system (100) according to any one of claims 1 to 5, wherein the one or more display server components comprise a 3D display server component (254, 256), and wherein the 3D display server component is configured to detect that the at least two views (400, 410) represent 3D image content based on metadata of the application (200), such as an identifier of the application.

9. The system (100) according to any one of claims 1 to 6, wherein the 3D display server component (254, 256) is configured to composite the at least two views (400, 410) by:
- arranging the primary view and the secondary view to be simultaneously shown in the display signal (444) in accordance with a stereo display format; or
- generating one or more further views based on the primary view and the secondary view, and simultaneously arranging the primary view and the one or more further views in the display signal (442) in accordance with a multiview display format.

10. The system (100) according to any one of claims 1 to 9, wherein the 3D-enabling auxiliary data (310) is one of the group of: further 2D image data which together with the 2D image data (300) represents a pair of stereo images, or depth-related data indicative of a distance of objects shown in the 2D image data to a camera or viewer.

11. A display device comprising the system according to any of claims 1 to 10.

12. A computer-implemented method of providing views of an application (200) to a window manager (220) of an operating system, wherein the views represent 3D image content for a 3D display, wherein the operating system is configured to establish:
the window manager (220), wherein the window manager is configured to manage visibility of views generated by applications;
one or more display server components (252-256), the one or more display server components being specific to a type of display and configured to, based on visibility information obtained from the window manager, composite the views into a display signal for display;
the method comprising, by the application, providing the 3D image content to the window manager in the form of at least two views which are mutually arranged in accordance with a view configuration, wherein the at least two views comprise a primary view comprising 2D image data and a secondary view comprising 3D-enabling auxiliary data which is indicative of depth of the 2D image data, and wherein the view configuration is selected to cause a 2D display server component for a 2D display to omit drawing, or overdraw, the secondary view when compositing the at least two views into the display signal.

13. A transitory or non-transitory computer-readable medium (500) comprising a computer program (510) representing an application, the computer program comprising instructions for causing a processor system to perform the method according to claim 12.

14. A computer-implemented method of compositing views of an application (200) executed on an operating system, wherein the views represent 3D image content for a 3D display, wherein the operating system is configured to establish:
a window manager (220) for managing visibility of views generated by applications;
a 3D display server component (254, 256) for a 3D display, the 3D display server component being configured to, based on visibility information obtained from the window manager, composite the views into a display signal for the 3D display;
wherein the application (200) is configured to provide the 3D image content to the window manager in the form of at least two views which are mutually arranged in accordance with a view configuration, wherein the at least two views comprise a primary view comprising 2D image data and a secondary view comprising 3D-enabling auxiliary data which is indicative of depth of the 2D image data, and wherein the view configuration is selected to cause a 2D display server component for a 2D display to omit drawing, or overdraw, the secondary view when compositing the at least two views into the display signal;
the method comprising, by the 3D display server component:
- determining that the at least two views represent 3D image content on the basis of signaling received from the application, or metadata of the application; and
- processing the primary view and the secondary view to obtain the display signal for the 3D display.

15. A transitory or non-transitory computer-readable medium (500) comprising a computer program (510) representing a 3D display server component, the computer program comprising instructions for causing a processor system to perform the method according to claim 14.
